(19) Europäisches Patentamt / European Patent Office / Office européen des brevets

(11) **EP 2 381 184 B1**

(12) **EUROPEAN PATENT SPECIFICATION**

(45) Date of publication and mention
of the grant of the patent:
**28.02.2018 Bulletin 2018/09**

(21) Application number: **10733260.3**

(22) Date of filing: **14.01.2010**

(51) Int Cl.:
*F04D 27/02* $^{(2006.01)}$      *F04D 27/00* $^{(2006.01)}$
*F24F 7/00* $^{(2006.01)}$      *F24F 7/06* $^{(2006.01)}$
*F24F 11/00* $^{(2018.01)}$      *F24F 11/04* $^{(0000.00)}$

(86) International application number:
**PCT/ES2010/000006**

(87) International publication number:
**WO 2010/084216 (29.07.2010 Gazette 2010/30)**

(54) **SYSTEM FOR AUTOMATICALLY ADJUSTING THE PRESSURE OF A FAN AS A FUNCTION OF THE REQUIRED FLOW RATE**

SYSTEM ZUR AUTOMATISCHEN DRUCKEINSTELLUNG BEI EINEM LÜFTER ALS FUNKTION DER ERFORDERLICHEN STRÖMUNGSRATE

SYSTÈME D'AJUSTEMENT AUTOMATIQUE DE LA PRESSION D'UN VENTILATEUR EN FONCTION DU DÉBIT SOUHAITÉ

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **22.01.2009 ES 200900171**

(43) Date of publication of application:
**26.10.2011 Bulletin 2011/43**

(73) Proprietor: **Soler & Palau Ventilation Group, .
08034 Barcelona (ES)**

(72) Inventor: **PALAU MALLOL, Josep
E-08034 Barcelona (ES)**

(74) Representative: **Cabinet Plasseraud
66, rue de la Chaussée d'Antin
75440 Paris Cedex 09 (FR)**

(56) References cited:
| | |
|---|---|
| **EP-A1- 1 691 140** | **WO-A1-2006/114491** |
| **FR-A1- 2 828 557** | **FR-A1- 2 835 598** |
| **FR-A1- 2 835 598** | **US-A- 4 257 318** |
| **US-A- 5 019 757** | **US-A1- 2003 064 676** |
| **US-A1- 2008 139 105** | **US-B1- 6 462 494** |
| **US-B1- 6 462 494** | |

**Description**

Technical Sector

The present invention relates to ventilation systems controlled by means of electronic regulation, proposing to that end an automatic adjustment system for automatically adjusting the pressure of a fan depending on the required flow rate, this system being fundamentally designed for application in single-family dwellings.

State of the Art

The air of single-family dwellings or premises where several people live together may be stuffy due to the grouping of people, to unpleasant odors caused by tobacco, to humidity conditions in the bathrooms, to odors and vapors derived from cooking food, etc.

Therefore air renewal is essential to enable maintaining suitable healthy inner ambient conditions. To that end hygienic ventilation must be performed by means, for example, of controlled mechanical ventilation wherein the exchanges of air correspond to the needs of the enclosure.

To that end, devices known as Controlled Mechanical Ventilation (CMV) Units which are essentially formed by a box, the inside of which houses a fan, said box having an inlet with a larger diameter for a duct directed towards the kitchen and several inlets for ducts going towards the bathrooms and the humid areas of the dwelling such that, the air is extracted from such enclosures through these ducts, which air is then conducted to the outside of the dwelling through a corresponding output nozzle of the unit.

An important aspect to be taken into account during air renewal is the consumption of this ventilation unit, and given that these units must operate for 24 hours a day, it is therefore essential to reduce as much as possible the level of electric power consumption of the ventilation unit.

The conventional ventilation units are defined by their characteristic curve in which the y-axis corresponds to the pressure values and the x-axis corresponds to the flow rate values, such that said conventional ventilation units have ventilation characteristics in which the available pressure increases when the flow rate decreases.

In the beginning, these units had a choke hatch at the mouths of the different enclosures which regulated the passage flow rate passing through said mouth depending on the needs of the enclosure, for example, if the enclosure was a bathroom, the mouth opened to the maximum when the shower was turned on to allow passage of the maximum flow possible and to thus extract steam from the shower. In the event that the mouths were blocking the passage flow rate more than needed, the fan continued working at a pressure higher than that required and it entailed an excessive and wasteful consumption.

Solutions presenting a flow rate/pressure curve with "constant pressure" or "constant flow rate" such as that described in Unites States Patent US 3,415,178 are known. This patent describes the existence of a control system based on controlling the speed of the motor of the fan and a pressure sensor located in the inlet duct such that a change of pressure in this duct, caused for example by opening or closing the hatches, is detected by the pressure sensor, which converts the change of pressure into a change of the electric resistance controlling the speed of the motor of the fan, such that a change in the pressure within one of the inlet ducts, caused for example by opening or closing the hatches, is automatically translated into a change of speed of the motor of the fan, such that constant pressure is maintained in the air flow from the rooms, i.e., it is a "constant pressure" solution.

A solution of this type is also described in United States Patent US 5,019,757. United States Patent number US 6,462,494 also discloses solutions for controlling the motor of a fan to obtain a "constant pressure" or a flow with "constant volume", claiming a solution according to which the signal corresponding to an actual speed value of the motor of the fan is measured and compared with the value of a control signal corresponding to a required speed and the actual speed is adjusted by control means formed by a microcontroller to which a series of different values are sent.

French Patent FR 2,884,904 describes a method for regulating the pressure of an air exhaust fan for use in collective, non-single family dwelling ventilation systems, in which a "variable pressure" and "variable flow rate" solution is described wherein the pressure increases as the flow rate increases up to a maximum point in which the pressure decreases with the flow rate.

This solution relates to a fan having an associated microcontroller which provides information about the motor of the fan in relation to the supply voltage and intensity thereof.

The microcontroller stores in its memory a flow rate/pressure curve established from prior parameters related to the network in which the fan will be actuated, such that the microcontroller comprises a program which allows determining a pressure from a flow rate passing through the fan by using the curve memorized in said microcontroller. Therefore, said required pressure is reached by controlling the speed of the motor of the fan.

However this example has the drawback of needing to calculate a load loss curve for each specific installation and for each of the branches in the minimum and maximum flow rate thereof, therefore in order to minimize the consumption of ventilation system, it is necessary to perform a study which is inherently associated with preparation time and engineering cost. Another solution is described in US2003/064676 A1.

Object of the Invention

The present invention proposes an automatic adjustment system as described in appended claim 1, which automatically adjusts the pressure of a fan in response to the needs of air renewal for a single-family dwelling, such that the consumption of the ventilation system is adjusted to the flow rate needs of the installation.

The system object of the invention comprises a controlled mechanical ventilation unit having a fan, a control logic box and measuring means for measuring the pressure at the inlet of said unit, which means detect any variation in the pressure of ducts communicating the controlled mechanical ventilation unit with the air extraction area (such as bathrooms, kitchen, etc.).

The control logic box stores a reference flow rate/pressure curve in relation to the controlled mechanical ventilation unit in its internal memory, demarcating above said curve a pre-established band in which the working area of the fan is established.

Said reference flow rate/pressure curve is a curve defining the minimum and maximum flow rates and pressures depending on the air renewal requirements according to the ventilation regulations of the market.

The ducts comprise at their ends mouths provided with conventional detection means, such as humidity detectors, CO2 detectors, people counters, or any similar solution, such that depending on the air extraction needs detected by said means, the mouths are open to a lesser or greater extent causing in turn a variation in the pressure of the ducts. This variation is detected by the measuring means for measuring pressure of the controlled mechanical ventilation unit.

The control logic box thus receives continuous information of the revolutions of the motor of the fan and of the pressure existing at the inlet of the fan of the controlled mechanical ventilation unit, such that when a variation is detected in the pressure of the ducts, the logic box sends a signal to the motor of the fan with the new pressure so that the latter adapts its speed to the new flow rate needs of the installation. This new pressure will have a value comprised within said band which will always be located above the reference curve.

An automatic adjustment system for automatically adjusting the pressure of a fan is thus obtained, presenting a "variable flow rate" and "variable pressure" solution such that the electric consumption of the controlled mechanical ventilation unit is adjusted to the air renewal flow rate needs of the installation with two particularities, on one hand the controlled mechanical ventilation unit itself incorporates all the necessary means for said adjustment completely regardless of the ducts and of the mouths of the different enclosures with respect to which it does not require any electric-electronic connection for receiving data or information aimed at said adjustment, such that the controlled mechanical ventilation unit is manufactured such that it is ready for its installation, not needing any measurement or adjustment in its installation site, it being sufficient to connect it to the power supply so that it directly provides said automatic adjustment system and accordingly savings in consumption.

On the other hand, the adjustment of the pressure is established within a band located above the reference curve such that complicated calculations and adjustments are not necessary to locate the pressure value precisely on the reference curve and it will be sufficient for it to be located within the aforementioned band so as to achieve a savings in energy which will be in any case somewhat spaced from the suitable value, but in any case it will be compensated by being close to said suitable value, with a solution that does not require complex calculations and adjustments for each installation. This is fundamental to the intended field of the present invention which is the field of single-family dwellings where complexity and high costs of installations for a collective dwelling are not allowed and where a solution like the one herein disclosed is demanded, allowing simple assembly of the mechanical ventilation unit as it is manufactured, obtaining an immediate saving in consumption.

Description of the Drawings

Figure 1 shows a scheme of the automatic adjustment system for automatically adjusting the pressure of a fan object of the invention.
Figure 2 shows the reference flow rate/pressure curve in relation to the system object of the invention.
Figure 3 shows a block diagram of the operation of the automatic adjustment system for automatically adjusting the pressure of a fan according to an embodiment of the invention.

Detailed Description of the Invention

The object of the invention relates to an automatic adjustment system for automatically adjusting the pressure of a fan, the consumption of the system being regulated depending on the air renewal needs of the enclosures to be ventilated including the kitchen, bathrooms and other humid areas of a single-family dwelling.

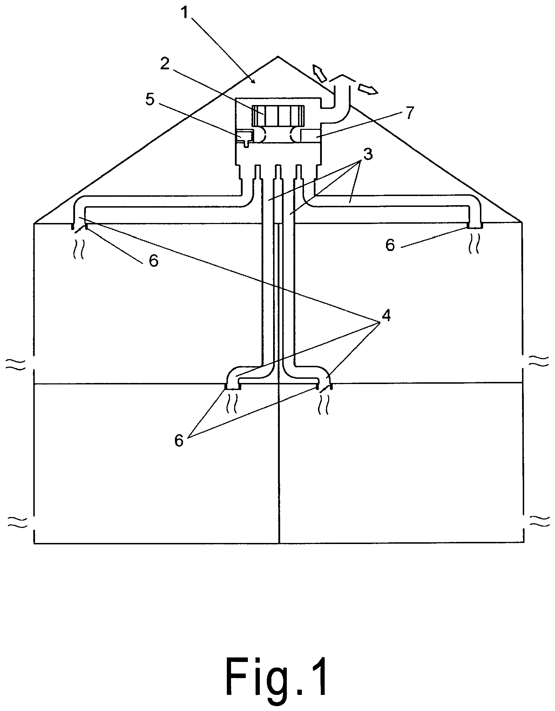

The system object of the invention depicted in Figure 1 is formed by a controlled mechanical ventilation unit (1) provided with a fan (2) of the type made up of a motor-turbine assembly, said controlled mechanical ventilation unit (1) being communicated with the enclosures to be ventilated through ducts (3) which are provided at their lower ends with mouths (4) susceptible to being regulated for blocking by means of opening or closing the same.

The controlled mechanical ventilation unit (1) has pressure detection means (5) which detect any fluctuation produced in the pressure of the ducts (3) due to opening or closing the mouths (4). Said mouths (4) are provided with detection means (6), such as CO2 detectors, humidity detectors, human presence detectors, smoke detectors or any similar solution.

These means (6) thereby command the opening or closing of the mouths (4) depending on the ambient conditions of the enclosure (number of persons, amount of humidity, etc.), this variation of the air inlet section of the mouths (4) causing a variation in the pressure of the ducts (3). This variation of pressure is detected by the means (5) of the controlled mechanical ventilation unit (1) such that the system object of the invention is susceptible to operating with any detection means (6).

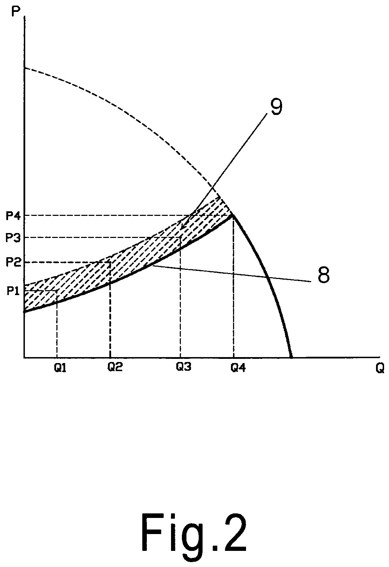

The controlled mechanical ventilation unit (1) comprises a control logic box (7) which stores a reference flow rate/pressure curve (8) of the controlled mechanical ventilation unit (1) in its internal memory, demarcating above said curve (8) a pre-established band (9) in which the working area of the fan (2) is established (see Figure 2).

The control logic box (7) receives on one hand actual and continuous information of the pressure in the ducts (3) detected by the means (5), and on the other hand a continuous reading of the revolutions at which the motor of the fan (2) supplied by a speed transducer rotates. This information is entered into the control logic which by means of a series of point interpolation calculations performed within the field demarcated by the band (9) establishes the new pressure value of the fan (2) so that the latter is adapted to the new air extraction conditions demanded by the installation.

Thus, as seen in Figure 2, when the mouths (4) have minimum opening, the controlled mechanical ventilation unit (1) works at a lower output, this state of operation being depicted by point (Pl, Ql).

When the means (6) detect any variation in the ambient conditions of an enclosure (such as for example turning on a shower), the mouth (4) of said enclosure increases its degree of opening which causes a variation in the pressure of the reciprocal duct (3), and therefore this variation is detected by the means (5), the latest reading of this last pressure being sent to the box (7) which commands the speed of the motor of the fan (2) so that it is adjusted to this new pressure value depicted by points (P2,Q2) and (P3,Q3), although an infinite number of points can logically be defined provided that they are within the band (9).

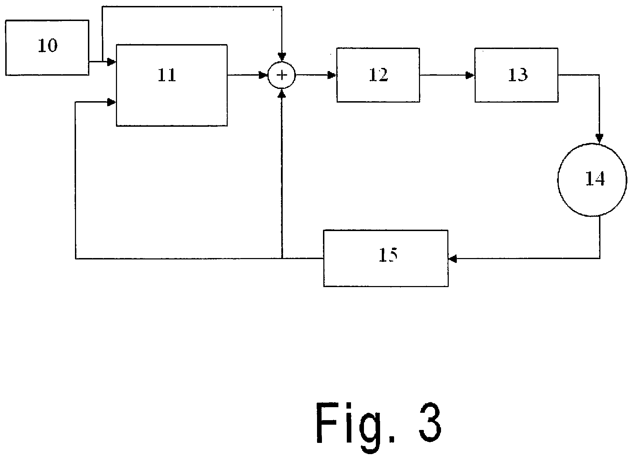

Thus the controlled opening of the mouths (4) takes place depending on the variation of the ambient conditions of the enclosures, adapting the working pressure of the fan (2) within the band (9) to a maximum operation area depicted by point (P4, Q4). Figure 3 shows a block diagram of the operation of the automatic adjustment system for automatically adjusting the pressure of a fan according to an embodiment of the invention which is formed by two control loops fed back to the input thereof with the actual speed value of the motor (14) of the fan (2).

The first control loop is formed by a pressure sensor (10) which corresponds to the means (5) and an algorithm (11) for calculating the curve (8) and the working area of the fan (2). Meanwhile, the second control loop is formed by an integral proportional module (12), an output buffer (13) and the motor (14) of fan (2), both control loops being closed by the speed transducer (15).

Thus, on one hand the actual pressure signal of the system and on the other hand, the actual speed value of the motor (14) of the fan (2) reach the algorithm (11) of the first control loop through the sensor (10), the new desired speed value at which the motor (14) of the fan (2) must rotate so as to be adjusted to the pressure required by the system being obtained at the output of the algorithm (11).

This algorithm (11) for calculating the curve (8) and the working area of the fan (2) is based on a point calculation and interpolation algorithm based on mathematical functions and several tables of actual values originating from specific tests, such that said desired speed value measured in revolutions per minute is obtained at the output of the algorithm (11), this being a function of pressure and defined by the expression:

$$P = 0.693 \times rpm - 18.3$$

The second control loop receives the actual speed value of the motor (14) of the fan (2) and the desired speed value, as well as the actual pressure value of the system, so that any variation in the pressure which would entail a variation in the speed of the motor (14) can be detected in this second control loop.

Thus, the module (12) of the second control loop is responsible for correcting the error between the desired speed value of the motor (14) of the fan (2) and the actual value supplied by the transducer (15) by means of multiple iterations such that the buffer (13) supplies the new rotation speed to the motor (14) so as to be adjusted to the flow rate needs of the installation, these conditions being maintained while the required pressure is comprised within the working area of the fan (2).

**Claims**

1. An automatic adjustment system for automatically adjusting fan pressure comprising:

   a controlled mechanical ventilation unit (1) for extracting air from enclosures of a single-family dwelling, and ducts (3) through which the controlled mechanical ventilation unit is communicated with the enclosures, the ducts (3) are provided with adjustable opening and closing mouths (4), the mouths (4) being configured to open and close depending on the flow rate of air needed to be extracted from the enclosures; the mechanical ventilation unit (1) comprising:

a fan (2) configured for rotational speed control;

means (5) measuring the pressure at the inlet of the fan (2) for detecting pressure variations in the ducts (3); and a control logic box (7) comprising an internal memory, the internal memory storing a reference flow rate/pressure curve (8), the reference flow rate/pressure curve is a curve defining minimum output, represented by minimum flow rate and corresponding minimum pressure, and maximum output, represented by maximum flow rate and corresponding maximum pressure, according to ventilation needs;

**characterized in that**

the control logic box (7) is configured to define above the reference flow rate/pressure curve a pre-established band (9) in which the working area of the fan (2) is established by means of data of the number of revolutions per minute of the fan (2) and the corresponding pressures at the inlet of the fan (2), the control logic box is configured to receive information of the revolutions of the fan and of the pressures at the inlet of the fan (2), and

the control logic box is configured to adapt the speed of the fan in response to a variation of pressure in the ducts such that the fan remains in the defined working area, thereby achieving automatic adjusting of the pressure of the fan depending on the required flow rate.

2. The automatic adjustment system according to claim 1, wherein the mouths (4) are provided with detection means (6) configured to command the opening and closing of the mouths (4) depending on the flow rate of air needed to be extracted from the enclosures which entails a variation in the pressure at the inlet of the fan (2).

3. The automatic adjustment system according to claim 1, wherein said means (5) measuring the pressure at the inlet of the fan (2) is a sensor (10), and the control logic box (7) is configured to:

by means of an algorithm (11) supply the desired speed value of the motor (14) of the fan (2) depending on an actual pressure signal of the unit supplied by the sensor (10) and on an actual speed of the motor (14) of the fan (2) supplied by a transducer (15), and by means of a module (12) correct an error between the desired value and the actual value of the speed of the motor (14) of the fan (2), and supply the new rotation speed to said motor (14) by means of a buffer (13) so as to be adjusted to the pressure conditions of the installation, these conditions being maintained while the pressure required by the unit is comprised within the working area of the fan (2).

4. The automatic adjustment system according to claim 3, wherein said module (12) is configured to receive the actual pressure signal of the unit so that any variation in the pressure which would entail a variation in the speed of the motor (14) can be detected.

5. A method for automatic pressure control of the automatic adjustment system according to claim 4, said method comprising a first control loop and a second control loop, wherein, in the first control loop:

the algorithm (11)

- is reached by the actual pressure signal of the unit and the actual speed value of the motor (14),
- calculates the flow rate/pressure curve (8) and the working area of the fan (2), and
- obtains a desired speed value measured in revolutions per minutes at an output of said algorithm,

in the second control loop:

the module (12) which is an integral proportional module

- receives said desired speed value from the algorithm, and the actual speed value of the motor (14) of the fan (2) as well as the actual pressure value of the unit, so that any variation in the pressure which would entail a variation in the speed of the motor (14) can be detected,
- correct the error between the desired speed value of the motor (14) of the fan (2) and the actual value supplied by the transducer (15) by means of multiple iteration, the buffer (13), controlled by the integral proportional module (12), supplies the new rotation speed to the motor (14), so as to be adjusted to the pressure conditions of the installation, these conditions being maintained while the pressure required by the unit is comprised within the working area of the fan (2).

**Patentansprüche**

1. Automatisches Einstellsystem zum automatischen Einstellen von Gebläsedruck, umfassend:

eine gesteuerte mechanische Lüftungseinheit (1) zum Extrahieren von Luft aus Räumen einer Einfamilien-Wohnung, und

Leitungen (3), durch welche die gesteuerte mechanische Lüftungseinheit mit den Räumen in Verbindung steht, wobei die Leitungen (3) mit einstellbaren Öffnungs- und Verschlussmündungen (4) bereitgestellt werden, wobei die Mündungen (4) konfiguriert sind, um sich abhängig von der Flussrate von Luft, die aus den Räumen extrahiert werden soll, zu öffnen und zu schließen;

wobei die mechanische Lüftungseinheit (1) Folgendes umfasst:

ein zum Steuern der Drehgeschwindigkeit konfiguriertes Gebläse (2);

den Druck am Einlass des Gebläses (2) messende Mittel (5) zum Erfassen von Druckänderungen in den Leitungen (3); und

eine Steuerlogikeinheit (7), umfassend einen internen Speicher, wobei der interne Speicher eine Referenzflussrate/-druckkurve (8) speichert, wobei die Referenzflussrate/-druckkurve eine Kurve ist, die Minimalausstoß, dargestellt durch minimale Flussrate und entsprechenden minimalen Druck, und Maximalausstoß, dargestellt durch maximale Flussrate und entsprechenden maximalen Druck, gemäß den Lüftungserfordernissen, definiert;

**dadurch gekennzeichnet, dass**

die Steuerlogikeinheit (7) konfiguriert ist, über der Referenzflussrate/-druckkurve eine vorher festgelegte Bandbreite (9) zu definieren, in welcher der Arbeitsbereich des Gebläses (2) mittels Daten zur Anzahl von Umdrehungen pro Minute des Gebläses (2) und der entsprechenden Drücke am Einlass des Gebläses (2) festgelegt ist, wobei die Steuerlogikeinheit konfiguriert ist, um Informationen zu den Umdrehungen des Gebläses und zu den Drücken am Einlass des Gebläses (2) zu empfangen, und

die Steuerlogikeinheit konfiguriert ist, die Geschwindigkeit des Gebläses als Reaktion auf eine Druckänderung in den Leitungen anzupassen, sodass das Gebläse im definierten Arbeitsbereich bleibt, dadurch automatisches Einstellen des Drucks des Gebläses abhängig von der erforderlichen Flussrate erzielt.

2. Automatisches Einstellungssystem gemäß Anspruch 1, wobei die Mündungen (4) mit Erfassungsmitteln (6) bereitgestellt werden, die konfiguriert sind, das Öffnen und Schließen der Mündungen (4) abhängig von der Flussrate an Luft, die von den Räumen extrahiert werden soll, zu steuern, was eine Änderung des Drucks am Einlass des Gebläses (2) mit sich bringt.

3. Automatisches Einstellungssystem gemäß Anspruch 1, wobei das den Druck am Einlass des Gebläses (2) messende Mittel (5) ein Sensor (10) ist, und die Steuerlogikeinheit (7) konfiguriert ist, um:

mittels eines Algorithmus (11) den gewünschten Geschwindigkeitswert des Motors (14) des Gebläses (2), abhängig von einem durch den Sensor (10) gelieferten aktuellen Drucksignal der Einheit und einer durch einen Transducer (15) gelieferten aktuellen Geschwindigkeit des Motors (14) des Gebläses (2), zu liefern, und

mittels eines Moduls (12) einen Fehler zwischen dem gewünschten Wert und dem aktuellen Wert der Geschwindigkeit des Motors (14) des Gebläses (2) zu korrigieren, und die neue Drehgeschwindigkeit mittels eines Puffers (13) an den Motor (14) zu liefern, um so auf die Druckbedingungen der Installation eingestellt zu werden, wobei diese Bedingungen aufrecht gehalten werden, während der durch die Einheit benötigte Druck innerhalb des Arbeitsbereichs des Gebläses (2) umfasst ist.

4. Automatisches Einstellungssystem gemäß Anspruch 3, wobei das Modul (12) konfiguriert ist, um das aktuelle Drucksignal der Einheit zu empfangen, sodass jede Änderung des Drucks, welche eine Änderung der Geschwindigkeit des Motors (14) mit sich bringen würde, erfasst werden kann.

5. Verfahren zur automatischen Drucksteuerung des automatischen Einstellungssystems gemäß Anspruch 4, wobei das Verfahren eine erste Steuerschleife und eine zweite Steuerschleife umfasst, wobei in der ersten Steuerschleife:

der Algorithmus (11)

- durch das aktuelle Drucksignal der Einheit und den aktuellen Geschwindigkeitswert des Motors (14) erreicht wird,
- die Flussrate/Druckkurve (8) und den Arbeitsbereich des Gebläses (2) berechnet, und
- einen gewünschten, in Umdrehungen pro Minute gemessenen, Geschwindigkeitswert an einer Ausgabe des Algorithmus erhält,

in der zweiten Steuerschleife:

das Modul (12), welches ein integrales proportionales Modul ist,

- den gewünschten Geschwindigkeitswert und den aktuellen Geschwindigkeitswert des Motors (14) des Gebläses (2) sowie den aktuelle Druckwert der Einheit von dem Algorithmus erhält, sodass jede Änderung des Drucks, welche eine Änderung der Geschwindigkeit des Motors (14) mit sich bringen würde, erfasst werden kann,

- den Fehler zwischen dem gewünschten Geschwindigkeitswert des Motors (14) des Gebläses (2) und dem aktuellen, durch den Transducer (15) mittels multipler Iteration gelieferten, Wert korrigiert,

der Puffer (13), gesteuert durch das integrale proportionale Modul (12), die neue Drehgeschwindigkeit des Motors (14) liefert, um so an die Druckbedingungen der Installation eingestellt zu werden, wobei diese Bedingungen aufrecht erhalten werden, während der durch die Einheit erforderte Druck innerhalb des Arbeitsbereich des Gebläses (2) umfasst ist.


**Revendications**

1. Système d'ajustement automatique pour ajuster automatiquement la pression de ventilateur comprenant :

   une unité de ventilation mécanique commandée (1) pour extraire de l'air de pièces d'une habituation individuelle, et
   des conduits (3) par lesquels l'unité de ventilation mécanique commandée communique avec les pièces, les conduits (3) sont pourvus de bouches d'ouverture et de fermeture (4) ajustables, les bouches (4) étant configurées pour s'ouvrir et se fermer en fonction du débit d'air qu'il faut extraire des pièces ;
   l'unité de ventilation mécanique (1) comprenant :

   un ventilateur (2) configuré pour une commande de vitesse de rotation ;
   un moyen (5) mesurant la pression au niveau de l'entrée du ventilateur (2) pour détecter des variations de pression dans les conduits (3) ; et
   une boîte de logique de commande (7) comprenant une mémoire interne, la mémoire interne stockant une courbe de débit/pression de référence (8), la courbe de débit/pression de référence est une courbe définissant une sortie minimale, représentée par un débit minimal et une pression minimale correspondante, et une sortie maximale, représentée par un débit maximal et une pression maximale correspondante, selon les besoins de ventilation ;

   **caractérisé en ce que**
   la boîte de logique de commande (7) est configurée pour définir au-dessus de la courbe de débit/pression de référence une bande préétablie (9) dans laquelle la zone de travail du ventilateur (2) est établie à l'aide de données du nombre de tours par minute du ventilateur (2) et des pressions correspondantes au niveau de l'entrée du ventilateur (2), la boîte de logique de commande est configurée pour recevoir des informations des tours du ventilateur et des pressions au niveau de l'entrée du ventilateur (2), et la boîte de logique de commande est configurée pour adapter la vitesse du ventilateur en réponse à une variation de pression dans les conduits de telle sorte que le ventilateur reste dans la zone de travail définie, réalisant ainsi un ajustement automatique de la pression du ventilateur en fonction du débit requis.

2. Système d'ajustement automatique selon la revendication 1, dans lequel les bouches (4) sont pourvues d'un moyen de détection (6) configuré pour commander l'ouverture et la fermeture des bouches (4) en fonction du débit d'air qu'il faut extraire des pièces, ce qui entraîne une variation de la pression au niveau de l'entrée du ventilateur (2).

3. Système d'ajustement automatique selon la revendication 1, dans lequel ledit moyen (5) mesurant la pression au niveau de l'entrée du ventilateur (2) est un capteur (10), et la boîte de logique de commande (7) est configurée pour :

   à l'aide d'un algorithme (11), apporter la valeur de vitesse souhaitée du moteur (14) du ventilateur (2) en fonction d'un signal de pression réelle de l'unité apporté par le capteur (10) et d'une vitesse réelle du moteur (14) du ventilateur (2) apportée par un transducteur (15), et
   à l'aide d'un module (12), corriger une erreur entre la valeur souhaitée et la valeur réelle de la vitesse du moteur (14) du ventilateur (2), et apporter la nouvelle vitesse de rotation audit moteur (14) à l'aide d'un tampon (13) de manière à ce qu'elle soit ajustée aux conditions de pression de l'installation, ces conditions étant maintenues alors que la pression requise par l'unité est comprise dans la zone de travail du ventilateur (2).

4. Système d'ajustement automatique selon la revendication 3, dans lequel ledit module (12) est configuré pour recevoir le signal de pression réelle de l'unité de telle sorte que toute variation de la pression qui entraînerait une variation de la vitesse du moteur (14) peut être détectée.

5.  Procédé pour commande de pression automatique du système d'ajustement automatique selon la revendication 4,

    ledit procédé comprenant une première boucle de commande et une seconde boucle de commande, dans lequel, dans la première boucle de commande :

    l'algorithme (11)

    - est atteint par le signal de pression réelle de l'unité et la valeur de vitesse réelle du moteur (14),
    - calcule la courbe de débit/pression (8) et la zone de travail du ventilateur (2), et
    - obtient une valeur de vitesse souhaitée mesurée en tours par minute au niveau d'une sortie dudit algorithme,

    dans la seconde boucle de commande :

    le module (12) qui est un module proportionnel intégral

    - reçoit ladite valeur de vitesse souhaitée à partir de l'algorithme, et la valeur de vitesse réelle du moteur (14) du ventilateur (2) ainsi que la valeur de pression réelle de l'unité, de telle sorte que toute variation de la pression qui entraînerait une variation de la vitesse du moteur (14) peut être détectée,
    - corrige l'erreur entre la valeur de vitesse souhaitée du moteur (14) du ventilateur (2) et la valeur réelle apportée par le transducteur (15) à l'aide de multiples itérations, le tampon (13), commandé par le module proportionnel intégral (12), apporte la nouvelle vitesse de rotation au moteur (14), de manière à ce qu'elle soit ajustée à la condition de pression de l'installation, ces conditions étant maintenues alors que la pression requise par l'unité est comprise dans la zone de travail du ventilateur (2).

Fig.1

Fig.2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3415178 A
- US 5019757 A
- US 6462494 B
- FR 2884904
- US 2003064676 A1